# EUROPÄISCHE PATENTANMELDUNG

(11) **EP 1 953 672 A2**
(43) Veröffentlichungstag der Anmeldung: **06.08.2008**
(21) Anmeldenummer: 08100548.0
(22) Anmeldetag: 16.01.2008
(51) Int. Cl.: G06F 21/24

(54) **Verfahren und Anordnung zur Erzeugung eines signierten Text- und/oder Bilddokuments**

(30) Priorität: 24.01.2007 DE 102007003597
(71) Anmelder: VOICE.TRUST AG, 81379 München (DE)
(72) Erfinder: Mumm, Marc, 80999, München (DE); Holland, Chris, 82041, Deisenhofen (DE)
(74) Vertreter: Meissner, Bolte & Partner

(57) **Zusammenfassung**

Die Erfindung bezieht sich auf ein Verfahren und eine Anordnung zur Erzeugung eines signierten Text- und/oder Bilddokurnents, insbesondere eines digitalen Dokuments zum elektronischen Versand und/oder zur elektronischen Speicherung. Die Erfindung zeichnet sich dadurch aus, dass auf einem Basisdokument der Name und/oder ein Bild und/oder eine sonstige Repräsentation einer Person, wie etwa ein Personen-Code, in Verbindung mit einem Authentifizierungs-Zertifikat angebracht wird, wobei das Authentifizierungs-Zertifikafi im Ergebnis einer im zeitlichen Zusammenhang mit der Erzeugung des Dokuments ausgeführten Stimmanalyse der Person erzeugt wird.

## Beschreibung

Die Erfindung betrifft ein Verfahren zur Erzeugung eines signierten Text- und/oder Bilddokuments, insbesondere eines digitalen Dokuments zum elektronischen Versand und/oder zur elektronischen Speicherung, sowie ein Verfahren zur Verifizierung eines derartigen signierten Dokuments und schließlich eine Anordnung zur Durchführung dieser Verfahren.

Im "elektronischen" Schriftverkehr, also speziell beim E-Mail-Versand von Text- oder anderen Datenfiles, erlangt das Problem der Echtheitsprüfung besondere Relevanz, weil die im herkömmlichen Schriftverkehr übliche und dort als Hinweis auf die Echtheit eines Dokuments weitestgehend anerkannte handschriftliche Unterzeichnung in der Regel nicht vorgesehen ist und auch sonstige traditionelle Echtheits-Hinweise (farbiger und/oder mit Einprägungen versehener Kopfbogen, besondere Papierarten, postalische Bearbeitungsvermerke etc.) nicht zur Verfügung stehen. Es ist indes zu betonen, dass das Problem der Echtheitsprüfung versandter Dokumente auch beim herkömmlichen Schriftverkehr - und hier insbesondere bei der Fax-Kommunikation - lediglich bei niedrigen Sicherheitsanforderungen hinreichend gelöst ist. Bei hohen Sicherheitsanforderungen werden daher außerhalb des eigentlichen Dokumentes liegende Sicherheitsmaßnahmen zusätzlich ergriffen, wie etwa der Versand auf klar definierten, geschützten Wegen oder spezielle Rückbestätigungs-Rituale.

Für den elektronischen Schriftverkehr haben mittlerweile etablierte Verschlüsselungstechniken, wie etwa PGP, neben ihrer eigentlichen Funktion des Schutzes vor unbefugtem Zugriff auf dem Übertragungsweg auch einen erheblichen Fortschritt hinsichtlich der Echtheits-Erkennung der Nachricht erbracht. Das letztere Problem ist aber schon deshalb hiermit nicht befriedigend gelöst, weil die zugehörigen Schlüssel vielfach nicht einzelnen Personen, sondern Personengruppen zugeordnet sind und in Arbeitsumgebungen auch personalisierte Schlüssel oft nicht zuverlässig geheim gehalten werden (können).

Bekannt und etabliert sind mittlerweile auch Techniken der elektronischen Signatur von Dokumenten, die auf der Zuweisung und dem Einsatz einer personalisierten Signaturkarte beruhen. Diese Verfahren gewährleisten einen hohen Sicherheitsstandard, sofern der persönliche Umgang mit der Signaturkarte diesem hohen Standard genügt. In der Praxis treten erhebliche Einbußen an Sicherheit durch nicht hinreichend sicherheitsbewusstem Umgang mit der Signaturkarte auf, und zudem leiden diese Verfahren an den typischen Problemen aller karten-basierten Zugriffssysteme, wie etwa erheblichen Störungen und Unbequemlichkeiten bei einem Verlegen oder Verlust der Karte.

Der Erfindung liegt die Aufgabe zugrunde, ein verbessertes Verfahren sowie eine verbesserte Anordnung der oben genannten Art bereitzustellen, welche insbesondere zuverlässig ein hohes Sicherheitsniveau gewährleisten, unempfindlich gegen Fehler und Nachlässigkeiten im praktischen Gebrauch sind und für die Nutzer ohne Beachtung spezieller und in der täglichen Arbeit schwer einzuhaltender Sicherheitsbestimmungen handhabbar sind.

Diese Aufgabe wird in ihrem Verfahrensaspekt durch ein Verfahren mit den Merkmalen des Anspruchs 1 bzw. des Anspruchs 14 und in ihrem Vorrichtungsaspekt durch eine Anordnung mit den Merkmalen des Anspruchs 17 gelöst. Zweckmäßige Fortbildungen des Erfindungsgedanken sind Gegenstand der jeweiligen abhängigen Ansprüche.

Die Erfindung schließt den Gedanken ein, das als echt zu kennzeichnende bzw. zu verifizierende Dokument mit einem geeigneten Zertifikat zu versehen, welches im Ergebnis eines Prozesses erstellt wird, den der das Dokument erzeugende bzw. dessen Versand bzw. Speicherung verantwortende Nutzer, der mit seiner Person für die Echtheit des Dokuments "bürgt", anstößt und in dessen Ablauf eindeutige biometrische Daten dieses Nutzers verarbeitet werden. Sie schließt weiter den Gedanken ein, für diesen Zertifizierungs-Prozess die Stimme dieses Nutzers als biometrisches Merkmalsensemble einzusetzen. Dieses Vorgehen fußt auf der Erkenntnis, dass die Stimme-Färbung des gesprochenen Worts (oder ggf. anderer stimmlicher Äußerungen) bei hinreichend differenzierter initialer Registrierung eine zumindest ähnlich signifikante Identifizierung ermöglicht wie ein Fingerabdruck oder Netzhautbild und daher zur Erstellung eines Authentifizierungs-Zertifikats ebenso geeignet ist wie jene.

Diesen gegenüber hat eine Stimme-Verifikation aber den wesentlichen Vorteil, dass sie sich von jedem Telekommunikations-Endgerät aus und damit praktisch in jeder Arbeits- und Lebenssituation ohne weitere technische Hilfsmittel ausführen lässt. Gegenüber PIN-basierten oder Chipkarten- bzw. Token-basierten Verfahren zum Nachweis der Identität eines Nutzers im elektronischen Datenverkehr hat das vorgeschlagene Verfahren (wie alle auf biometrischen Datenbasierende Verfahren) zudem den Vorteil, dass unmittelbar die Nutzer-Identität und nicht lediglich ein Nutzer-Wissen (Passwort oder PIN) bzw. ein Nutzer-Besitz (Token oder Chipkarte) verifiziert wird.

Vorteilhaft ist beim vorgeschlagenen Verfahren auch die Möglichkeit der Einstellung eines gewünschten Sicherheitspegels aufgrund vorliegender hinreichender Erfahrungswerte bei Stimmprofil-Erstellung und -Vergleich und einer auf die Erreichung dieses Sicherheitsniveaus abgestimmten Ausführung der anfänglichen Registrierung des Nutzers (auch als Enrolment bezeichnet) und der späteren Verifizierung, Hiermit lässt sich ein geeigneter Kompromiss zwischen dem dem Nutzer abverlangten Aufwand einerseits und dem Sicherheitsniveau andererseits recht präzise einstellen.

Weiterhin ermöglicht das vorgeschlagene Verfahren in vorteilhafter Weise eine Lebend-Prüfung des Nutzers, indem bei der Authentifizierung per Zufallsgenerator ausgewählte Sprachproben abgefordert werden, so dass eine Täuschung des Verifizierungssystems mit Sprachkonserven unmöglich ist - wogegen gespeicherte Kopien andere biometrische Merkmale von nicht mehr lebenden Nutzern zu einer Täuschung des entsprechenden Verifizierungssystems missbraucht werden können.

Weitere wichtige Vorteile haben das vorgeschlagene Verfahren und die Anordnung im Hinblick auf die Ergonomie und Nutzerakzeptanz. So ist aufgrund der täglichen Benutzung des gesprochenen Wortes als Mittel der Kommunikation mit anderen Menschen die Nutzung der Stimme auch zu Authentifizierungs-Zwecken ein nahe liegendes Vorgehen, welches auf keine Akzeptanz-Barrieren stößt. Zudem ermöglicht ein ohnehin auf dem Gebrauch der Stimme beruhendes Authentifizierungsverfahren die Einbindung in einen sprach-basierten und somit hochgradig ergonomischen Benutzerdialog "aus einem Guss". Mit den etablierten Mitteln der Sprachsynthese lässt sich zudem der Benutzerdialog wie auch die Sprachproben-Auswahl sehr leicht an unterschiedliche bzw. sich ändernde Anforderungen anpassen.

In dieser Patentanmeldung soll unter dem Bild einer Person im allgemeineren Sinne jegliches äußere Abbild, also neben einem fotografischen Portrait etwa auch eine vereinfachende zeichnerische Darstellung, unter einer Repräsentation der Person sowohl eine biometrische Repräsentation (Netzhautbild, Fingerabdruck) als auch beispielsweise ein Mitarbeiter-Code, ein Pseudonym o. ä., und unter einem Stimmprofil einer Person eine im Ergebnis der Auswertung von Sprachproben mit einem vorbestimmten Algorithmus enthaltene relevante Merkmals-Gesamtheit der Stimme verstanden werden, die eine Vielzahl von charakteristischen Datenpunkten umfasst. Einzelheiten der rechnerischen Stimmprofil-Gewinnung und des Stimmprofil-Vergleichs sind indes nicht Gegenstand der vorliegenden Patentanmeldung und werden daher hier nicht näher beschrieben.

Die Ausführung der Erfindung sieht insbesondere vor, dass die Stimmanalyse die Erzeugung eines aktuellen Stimmprofils einer einsprechenden Person und den rechnerischen Vergleich des aktuellen Stimmprofils mit einem in einer Registrierungs-Phase vorab erzeugten und gespeicherten, initialen Stimmprofil der angenommen gleichen Person einschließt. Optional ist vorgesehen, dass auf dem Basisdokument eine elektronische Signatur mit dem Authentifizierungs-Zertifikat sowie wahlweise ein Unterschrifts-Bild und/oder eine Sprachdatei der Person angebracht wird.

Insbesondere im Hinblick auf die Erzeugung und Verwendung von Hardcopies, etwa für einen Postversand oder eine Aktenablage, ist gemäß einer weiteren Ausführung der Erfindung vorgesehen, dass das Authentifizierungs-Zertifikat in einen 2D-Barcode integriert und dieser auf dem Dokument angebracht wird.

Eine weitere Ausführung der Erfindung geht davon aus, dass das Dokument beim Anbringen des Authentifizierungs-Zertifikats als pdf-File oder ähnliche bearbeitungsresistente Datei vorliegt, insbesondere vor dem Anbringen in ein pdf-File konvertiert wird. Dies erhöht zusätzlich die Sicherheit bezüglich des Inhaltes des Dokumentes, der mit der authentifizierten Signatur ja in möglichst unlösbarem Zusammenhang stehen soll.

In einer weiteren vorteilhaften Ausführung ist vorgesehen, dass die Erzeugung des aktuellen Stimmprofils und/oder die Registrierungs-Phase eine Übermittlung von Sprachproben per Telefon oder VoIP-Endgerät an eine Sprachproben-Eingabeschnittstelle aufweist. Selbstverständlich kann auch eine direkte lokale Eingabe per Mikrophon an einem Authentifizierungs-Server vorgesehen sein. Die Nutzung von über TK-Endgeräte oder ein Mikrofon als Sprache eingegebener biometrischer Information hat im übrigen den Vorteil einer relativ hohen Sicherheit gegenüber typischen störenden Datensystem-Eingriffen, wie etwa Viren.

In einer die Sicherheit des Systems vorteilhaft erhöhenden Weise ist vorgesehen, dass die Erzeugung des aktuellen Stimmprofils ein Einsprechen von unter Nutzung eines Zufallsgenerators vorbestimmten Sprachproben aufweist. Wie bereits weiter oben angemerkt, ermöglicht dies die so genannte Lebend-Prüfung und auch, darüber hinaus, insgesamt eine effiziente Abwehr des täuschenden Einspielens von Sprachproben-Kopien in das System.

Vorteilhaft wird als organisatorisches Hilfsmittel für den Prozessablauf eine spezielle Vorgangs-Kennung vergeben, die nachfolgend als Session-ID bezeichnet wird. Es ist also vorgesehen, dass eine eindeutige Verknüpfung zwischen dem Basisdokument und dem Authentifizierungs-Zertifikat in einem System-Server, unter Nutzung einer Zertifizierungs-Session-ID, gebildet wird, welche sowohl dem Basisdokument als auch dem jeweiligen Vorgang der Stimmanalyse zugewiesen wird. Für eine praktische Ausführung der Erfindung ist es aus derzeitiger Sicht zudem wesentlich, dass die Anbringung des Authentifizierungs-Zertifikats auf dem Dokument von einem System-Server, insbesondere unter Nutzung der Zertifizierungs-Session-ID und/oder unter Verknüpfung mit einem Zeitstempel, registriert wird.

Des weiteren ist vorgesehen, dass die Person in der aktuellen Stimmanalyse anhand einer systeminternen Kennung, wie etwa einer Nutzer-ID, oder einer Kennung eines Endgerätes, wie etwa der Telefonnummer oder MSISDN, identifiziert wird, von dem sie Sprachproben einspricht. Dies erhöht zusätzlich die Sicherheit bzw. ermöglicht - bei Aufrechterhaltung eines vorgegebenen Sicherheitsniveaus - eine Erhöhung des Benutzerkomforts, durch mögliche Verringerung der Anzahl von zu liefernden Sprachproben.

In einer weiteren Ausführung des Verfahrens ist vorgesehen, dass in der Registrierungs-Phase in Zuordnung zur registrierten Person ein Unterschriftsbild derselben gespeichert wird. Auch bei dieser Ausgestaltung kann eine spezielle Vorgangs-Kennung hilfreich sein. Es ist dann vorgesehen, dass eine eindeutige Verknüpfung zwischen dem gespeicherten Unterschrifts-Bild und dem gespeicherten Stimmprofil der Person über eine Registrierungs-Session-ID gebildet wird, die sowohl dem Vorgang der initialen Stimmanalyse als auch einer Erfassung des Unterschrifts-Bildes zugewiesen wird. Das erwähnte Unterschriftsbild kann in vorteilhafter Weise per Fax oder per E-Mail, speziell als pdf- oder Bild-Datei, an eine Systemverwaltungseinheit (System-Server) gesandt und dort im oben erwähnten Sinne verarbeitet werden.

In der Verifizierungs-Phase eines vorab erfindungsgemäß authentifizierten Dokumentes wird eine Auswertung des Authentifizierungs-Zertifikats ausgeführt, und dem Besitzer des Dokuments werden im Ergebnis der Auswertung unverschlüsselte Informationen zum Signierungs-/Zertifizierungs-Vorgang bereitgestellt, Diese Informationen sind so ausgebildet, dass der aktuelle Besitzer des Dokumentes erkennen oder jedenfalls eine Erkennung dahingehend veranlassen kann, ob das Dokument tatsächlich vom behaupteten Unterzeichner signiert wurde. Insbesondere wird zu diesem Zweck das Dokument zur Auswertung an den System-Server übermittelt, und von diesem wird personenbezogene Information und/oder Zeitstempel-Information an ein Endgerät des Besitzers des Dokuments übermittelt. Hierbei kann die Zeitstempel-Information als zusätzliche Verifizierungs-Information dienen oder einfach als Absendezeit-Information (unabhängig vom Sicherheitsschema) genutzt werden.

Bei der Verifizierung eines (nur) als Hardcopy vorliegenden Dokuments ist bevorzugt vorgesehen, dass zur Verifizierung ein 2D-Barcode auf dem als Druckbild vorliegenden Dokument gelesen wird. Da die Authentifizierungs-Information in dem 2D-Barcode enthalten ist, erhält der System-Server hiermit die gleiche Information wie bei elektronischer Übermittlung und kann also auch eine entsprechende Verifizierungs-Information an den Besitzer des Dokuments ausgeben.

Ein erfindungsgemäßes System bzw. eine Anordnung zur Durchführung des oben beschriebenen Verfahrens umfasst Funktionseinheiten, deren Funktion und Verknüpfung sich bereits weitestgehend aus der Erläuterung des Verfahrens ergibt, so dass die Vorrichtungsaspekte weitgehend zu den Verfahrensaspekten korrespondieren. Es versteht sich, dass die Realisierung eines solchen Systems weitgehend eine Software-Implementierung darstellt, die aber in Verbindung mit entsprechender Prozess- und Speicherkapazität funktioniert und zu der angepasste Ein- und Ausgabeschnittstellen für das Dokument einerseits und die für die Authentifizierung benötigten bzw. sich aus dieser ergebenden Informationen andererseits gehören.

Es handelt sich hierbei insbesondere um eine Basisdokument-Eingabeschnittstelle und eine Dokument-Ausgabeschnittstelle bzw. eine Sprachproben-Eingabeschnittstelle. Als wesentliche Verarbeitungs-Komponenten des Systems sind eine Stimmanalyseeinrichtung zur Ausführung der Stimmanalyse und Gewinnung des jeweiligen Stimmprofils und eine Zertifizierungseinrichtung zur Erzeugung und Anbringung des Authentifizierungs-Zertifikats auf dem (Basis-) Dokument zu nennen. Weiterhin eine Stimmprofil-Speichereinheit und eine Stimmprofil-Vergleichereinheit.

In einer Ausführung der Erfindung ist des weiteren vorgesehen, dass der System-Server eine Personendaten-Speichereinheit zur Speicherung personenbezogener Informationen der Nutzer in eindeutiger Zuordnung zu einem personenspezifischen initialen Stimmprofil aufweisen. Hierbei kann die Personendaten-Speichereinrichtung einen Bildspeicher zur Speicherung eines Unterschrifts-Bildes und/oder einen Sprachspeicher zur Speicherung einer Sprachdatei der jeweiligen Person aufweisen, wobei der Bildspeicher und/oder Sprachspeicher mit einem Eingang der Zertifizierungseinrichtung zur Anbringung des Unterschrifts-Bildes oder der Sprachdatei auf einem zu signierenden Dokument verbunden ist. Überdies hat die Personendaten-Speichereinrichtung eine dedizierte Ausgabeschnittstelle zur Ausgabe personenbezogener Informationen an den Besitzer eines durch den System-Server signierten Dokuments. Die Funktionseinheiten zur Speicherung und Ein-/Ausgabe von Personendaten können auch separat vom System-Server als Datenbasis mit entsprechendem Managementsystem strukturiert sein und über geeignete Schnittstellen mit dem System-Server verknüpft sein.

In einer weiteren vorteilhaften Ausführung der Erfindung ist vorgesehen, dass der System-Server eine Benutzerführungs-Einrichtung zur Realisierung einer jeweils spezifischen Menüführung in der Registrierungs-Phase und der Zertifizierungs-Phase und wahlweise einer Verifizierungs-Phase aufweist. Hierbei umfasst die Benutzerführungs-Einrichtung insbesondere Mittel zur Zuweisung einer Registrierungs-Session-ID bzw. Zertifizierungs-Session-ID und zur Steuerung der Stimmanalyse sowie der einander zuzuordnenden Speichervorgänge der verschiedenen Speichereinrichtungen anhand der jeweiligen Sessiort-ID.

Es versteht sich, dass während der Zertifizierungs-Phase einerseits und der Verifizierungs-Phase andererseits einige der erwähnten Schnittstellen eine etwas unterschiedliche Funktion haben können, und dies gilt ebenso für die vorangehende (nicht zum Gegenstand der vorliegenden Patentanmeldung gehörende) Registrierungs-Phase der berechtigten Nutzer. So ist in einer Ausführung der Erfindung vorgesehen, dass während einer Verifizierungs-Phase die Basisdokument-Eingabeschnittstelle als Dokument-Eingabeschnittstelle wirkt und an diese sowie an die Personendaten-Ausgabeschnittstelle ein Datenendgerät des Besitzers des zu verifizierenden Dokuments oder an die Dokument-Eingabeschnittstelle ein 2D-Barcodeleser und an die Personendaten-Ausgabeschnittstelle eine Anzeigeeinheit angeschlossen ist.

Vorteile und Zweckmäßigkeiten der Erfindung ergeben sich im übrigen aus der nachfolgenden Beschreibung eines bevorzugten Ausführungsbeispiels anhand der Figuren. Von diesen zeigen:
- Fig. 1: eine schematische Darstellung des erfindungsgemäßen Systems in der Registrierungs-Phase,
- Fig. 2: eine schematische Darstellung des erfindungsgemäßen Systems in der Authentifizierungs-Phase, und
- Fig. 3: eine schematische Darstellung des erfindungsgemäßen Systems in der Zertifizierungs-Phase.

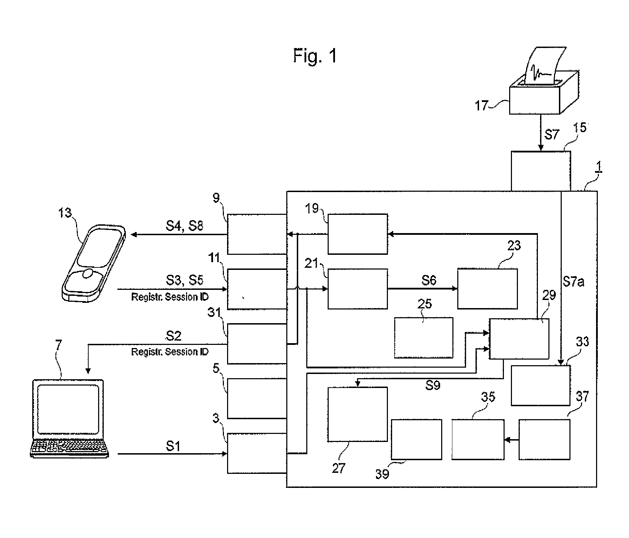

In den Figuren 1 bis 3 ist jeweils skizzenartig ein und die selbe Ausführungsform der erfindungsgemäßen Anordnung dargestellt, wobei die in der jeweiligen Phase nicht aktiven Komponenten signalmäßig nicht verknüpft sind. Eine Beschreibung der System-Gesamtstruktur wird hier vorangestellt. Es wird ausdrücklich angemerkt, dass die skizzierte Struktur zur Erläuterung von Hauptfunktionen des Systems zur Erläuterung von Hauptfunktionen des Systems stark vereinfacht ist und die Spezifik bestimmter Eingabe- und Verarbeitungsvorgänge, die jeweils unter Nutzung spezieller Softwareprodukte erfolgen, nicht adäquat wiederspiegeln kann.

Die Anordnung umfasst einen System-Server 1, der über eine Dokument-Eingabeschnittstelle 3 eingangsseitig und über eine Dokument-Ausgabeschnittstelle 5 ausgangsseitig mit einem Datenendgerät 7 bzw. 7' eines jeweiligen Nutzers, über eine Sprachausgabe-Schnittstelle 9 ausgangsseitig und über eine Sprachproben-Eingabeschnittstelle 11 eingangsseitig mit einem Mobiltelefon (TK-Endgerät) 13 eines Nutzers sowie über eine Fax-Eingangsschnittstelle 15 eingangsseitig mit einem Faxgerät 17 eines Nutzers verbindbar ist. In wie weit die angegebenen Verbindungen signalmäßig tatsächlich hergestellt werden, ist von der Betriebsphase des Systems abhängig und wird weiter unten genauer ausgeführt.

Als wesentliche interne Funktionseinheiten hat der System-Server 1 eine mit der Sprach-Ausgabeschnittstelle 9 verbundene Benutzerführungs-Einrichtung 19, eine eingangsseitig mit der Sprachproben-Eingabeschnittstelle 11 verbundene Stimmanalyseeinrichtung 21 (die steuersignalmäßig dem mit der Benutzerführungs-Einrichtung 19 verbunden sein kann), eine Stimmprofil-Speichereinheit 23 und eine Stimmprofil-Vergleichereinheit 25 (die in verschiedener Weise miteinander verbunden sein können), eine eingangsseitig mit der Dokument-Eingabeschnittstelle 3, ausgangsseitig mit der Dokument-Ausgabeschnittstelle 5 und steuersignalmäßig mit der Sümmprofil-Vergleichereinheit 25 verbindbare Zertifizierungseinrichtung 27, einen Personendatenspeicher 29 mit zugeordneter Ausgabeschnittstelle 31 sowie schließlich einen mit der Fax-Eingangsschnittstelle 15 eingangsseitig sowie der Dokument-Ausgabeschnittstelle 5 ausgangsseitig verbindbaren Bildspeicher 33. Die Schnittstelle 31 dient auch zur Ausgabe nicht dokumentbezogener Daten (etwa einer Menüführung) an das Datenendgerät 7 bzw. 7'. Schließlich umfasst der System-Server 1 noch einen Zertifizierungsdatenspeicher 35 zur Speicherung relevanter Daten des Zertifizierungsvorganges, der in der dargestellten Ausführung mit einer Echtzeituhr 37 verbunden und mit der Personendaten-Speichereinrichtung 29 oder der Verifizierungsdaten-Ausgabeschnittstelle 31 signalmäßig sowie schließlich mit einer Zertifikat-Leseeinrichtung 39 über einen weiteren Eingang verbindbar ist.

Bei der Registrierung eines neuen Nutzers gibt dieser, wie in Fig. 1 gezeigt, zunächst in einem Schritt S1 über sein Datenendgerät 7 bestimmtes Start-Informationen in den System-Server ein. Hierzu kann eine Website des Systembetreibers benutzt werden, und die relevanten Informationen können den Namen, das Land, die Telefonnummer und weitere Personendaten des neuen Nutzers umfassen. Diese Daten gelangen von der hier als Dateneingabeschnittstelle wirkenden Dokument-Eingabeschnittstelle 3 in den Personendatenspeicher 29 des System-Servers.

Durch die Menüführungseinrichtung 19 wird daraufhin eine geeignete Anwendung (z.B. ActiveX, Java, JavaScript) ausgeführt, um eine Registrierungs-Session-ID zu generieren und in einem Schritt S2 den ersten Teil einer Benutzerführung zu realisieren. Diese umfasst beispielsweise das Öffnen eines Popup-Fensters, in dem die Registrierungs-Session-ID und eine Telefonnummer angezeigt werden, die der Nutzer zur Fortführung des Registrierungsverfahrens anrufen soll. Der Nutzer wählt daraufhin mit seinem Mobiltelefon 13 in einem dritten Schritt S3 die angegebene Rufnummer und gibt im Rahmen einer entsprechenden Benutzerführung (per Sprachsynthese realisiert) seine Registrierungs-Session-ID ein. Im übrigen wertet in diesem Schritt der System-Server die Mobilfunkrufnummer zur Identifizierung des Nutzers aus.

Im Rahmen einer weiteren, hier mit dem Schritt S4 bezeichneten, Benutzerführung werden dem Nutzer Sprachproben abverlangt, die er in einem mit S5 bezeichneten Schritt über das Mobiltelefon einspricht und die über die Spracheingabe-Schnittstelle 11 in den System-Server gelangen und in der Sprachanalyseeinrichtung 21 anhand des dort gespeicherten Algorithmus zur Gewinnung eines Stimmprofils des Nutzers analysiert werden. In einem Schritt S6 wird das Stimmprofil dann im Stimmprofilspeicher 23 abgelegt.

Bei der dargestellten Ausführung sendet der Nutzer zudem in einem Schritt S7 per Fax (unter Angabe einer User-ID oder auch der Registrierungs-Session-ID) eine Probe seiner handschriftlichen Unterschrift an den System-Server, die dort in einem Schritt S7a im Bildspeicher 33 in Zuordnung zu den im Personendatenspeicher 29 und im Stimmprofilspeicher 23 gespeicherten Datensätzen abgelegt wird. In einem weiteren Menüführungsschritt S8 erhält der Nutzer schließlich die Bestätigung, dass er erfolgreich registriert ist, und in einem Schritt S9 wird in der Zertifizierungseinrichtung 27 ein dem registrierten Nutzer eindeutig zugeordnetes Authentifizierungs-Zertifikat abgelegt. Die Registrierungsphase ist damit beendet.

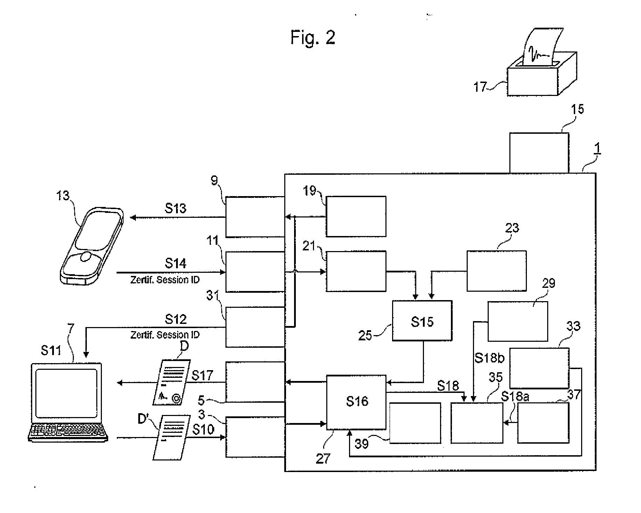

In der Zertifizierungs-Phase, die in Fig. 2 skizzenhaft dargestellt ist, wird ein Basisdokument D' aufgrund des in der Zertifizierungseinrichtung 27 vorgespeicherten Zertifikats authentifiziert und damit zum signierten und authentifizierten Dokument D. Hierzu wird in einem Schritt S10 zunächst das Basisdokument D' über die Dokument-Eingabeschnittstelle 3 (Web-Interface) auf den System-Server 1 heraufgeladen, und zwar entweder als bereits im Datenendgerät 7 in das pdf-Format konvertiertes Dokument, oder unter Konvertierung in das pdf-Format auf dem System-Server.

Per Doppelklick auf das Basisdokument zur Platzierung eines Kastens für die optische Repräsentation der digitalen Signatur initiiert der Benutzer in einem Schritt S11 die Ausführung einer ActiveX-, Java- bzw. JavaScript-Appfikation, bei der eine Zertifizierungs-Session-ID generiert und über die Ausgabeschnittstelle 31 in einem Schritt S12 an das Datenendgerät 7 des wegen der Zertifizierung anfragenden Nutzers übermittelt wird. Außerdem wird dem Nutzer (ähnlich wie in der Registrierungs-Phase) eine zu wählende Rufnummer angezeigt.

Der Nutzer wählt diese Rufnummer und spricht im Rahmen einer weiteren Benutzerführung S13 in einem Schritt S14 vorgegebene Sprachproben ein, die über die Sprachproben-Eingabeschnittstelle 11 zur Stimmanalyseeinrichtung 21 gelangen und dort analysiert werden. In diesem Vorgang erfolgt die Identifizierung des Nutzers wieder über eine Mobilfunkrufnummer (oder eine auf anderem Wege vergebene User-ID) und die Konsistenz des Gesamtvorganges wird durch die Zertifizierungs-Session-ID gewährleistet. In einem Schritt S15 wird das aktuelle Stimmprofil mit dem im Stimmprofilspeicher 23 gespeicherten Stimmprofil aus der Registrierungs-Phase verglichen und im Übereinstimmungs-Fall durch die Vergleichereinheit 25 ein entsprechendes Signal an die Zertifizierungseinrichtung 27 ausgegeben.

Diese generiert daraufhin ein aktuelles Authentifizierungs-Zertifikat und bringt dieses in einem Schritt S16 auf dem Basisdokument D' an, welches hierdurch zum signierten und authentifizierten Dokument D wird, das sich der Nutzer im Schritt S17 auf sein Datenendgerät herunterlädt. Die digitale Signatur und Authentifizierung umfasst beispielsweise die Zertifizierungs-Session-ID und die Telefonnummer und das vorgespeicherte Zertifikat des Nutzers. Die Session-ID wird zudem in einem Schritt S18 zusammen mit einem Zeitstempel (S18a) in dem Zertifizierungsdatenspeicher 35 abgespeichert, wodurch die Verfolgbarkeit des ZertifizierungsVorganges für eine spätere Verifizierung des Dokuments gewährleistet wird. Zugleich werden im Schritt S18b aus dem Nutzerdatenspeicher 29 geholte relevante Nutzerdaten vorgangsbezogen mit abgespeichert und stehen für die spätere Verifizierung in Zuordnung zur Zertifizierungs-Session-ID bereit.

Anzumerken ist, dass bei dieser Ausführung zusammen mit der digitalen Signatur und dem Authentifizierungs-Zertifikat das im Bildspeicher 33 gespeicherte Unterschrifts-Bild des Nutzers auf dem Dokument angebracht wird und somit in dem vom Nutzer heruntergeladenen Dokument-File enthalten ist.

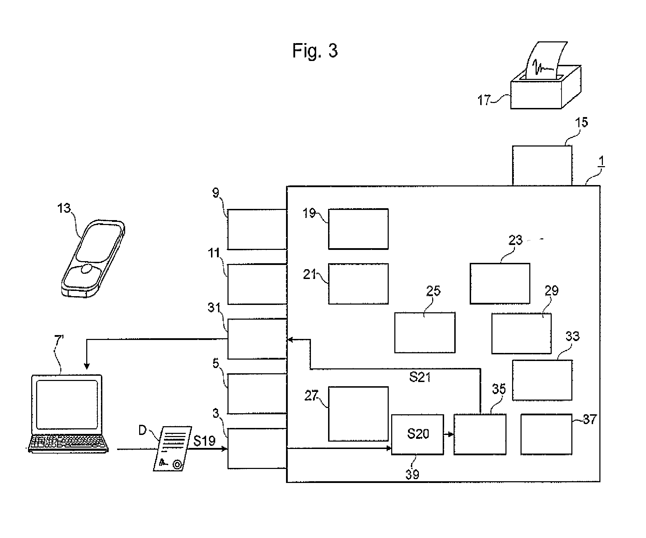

In der in Fig. 3 dargestellten Verifizierungs-Phase gibt ein anderer Nutzer des Systems mit seinem Datenendgerät 7' das in seinem Besitz befindliche signierte und authentifizierte Dokument D zur Verifizierung an den System-Server 1 (Heraufladen per Web-Interface; Schritt S19). In der Zertifikat-Leseeinrichtung 39 wird in einem Schritt S20 das Authentifizierungs-Zertifikat gelesen und über die darin erhaltene Zertifizierungs-Session-ID eine Zuordnung zu dem im Zertifizierungsdatenspeicher 35 unter dieser ID abgespeicherten Datensatz hergestellt. In einem Schritt S21 werden in Reaktion hierauf die relevanten Daten aus dem Zertifizierungsdatenspeicher 35 über die Ausgabeschnittstelle 31 auf das Datenendgerät 7' des Nutzers ausgegeben. Beispielsweise werden Datum und Uhrzeit der Zertifizierung und der Name des unterzeichnenden Nutzers angezeigt. Der abfragende Nutzer kann daraus auf die Echtheit des Dokuments schließen.

Die Ausführung der Erfindung ist nicht auf die hier dargestellte Anordnung und den beschriebenen Ablauf beschränkt, sondern ebenso in einer Vielzahl von Abwandlungen möglich, die im Rahmen fachgemäßen Handelns liegen. Insbesondere sind Abwandlungen hinsichtlich der Benutzerführung (einschließlich der benutzten Nutzer-Endgeräte) sowie der beim Signieren und Zertifizieren benutzten Daten/Bilder/Nutzermerkmale möglich. So kann mit dem Dokument eine Sprachdatei des unterzeichnenden Nutzers verknüpft werden, sofern vorab (etwa anstelle des Unterschrifts-Bildes oder parallel zu diesem) dem System eine entsprechende Datei bereitgestellt wurde.

## Patentansprüche

1. Verfahren zur Erzeugung eines signierten Text- und/oder Bilddokuments, insbesondere eines digitalen Dokuments zum elektronischen Versand und/oder zur elektronischen Speicherung, wobei auf einem Basisdokument der Name und/oder ein Bild und/oder eine sonstige Repräsentation einer Person, wie etwa ein Personen-Code, in Verbindung mit einem Authentifizierungs-Zertifikat angebracht wird, wobei das Authentifizierungs-Zertifikat im Ergebnis einer im zeitlichen Zusammenhang mit der Erzeugung des Dokuments ausgeführten Stimmanalyse der Person erzeugt wird.

2. Verfahren nach Anspruch 1,
**dadurch gekennzeichnet, dass**
die Stimmanalyse die Erzeugung eines aktuellen Stimmprofils einer einsprechenden Person und den rechnerischen Vergleich des aktuellen Stimmprofils mit einem in einer Registrierungs-Phase vorab erzeugten und gespeicherten, initialen Stimmprofil der angenommen gleichen Person einschließt.

3. Verfahren nach Anspruch 1 oder 2,
**dadurch gekennzeichnet, dass**
auf dem Basisdokument eine elektronische Signatur mit dem Authentifizierungs-Zertifikat sowie wahlweise ein Unterschrifts-Bild und/oder eine Sprachdatei der Person angebracht wird.

4. Verfahren nach einem der vorangehenden Ansprüche,
**dadurch gekennzeichnet, dass**
das Authentifizierungs-Zertifikat in einen 2D-Barcode integriert und dieser auf dem Dokument angebracht wird.

5. Verfahren nach einem der vorangehenden Ansprüche,
**dadurch gekennzeichnet, dass**
das Dokument beim Anbringen des Authentifizierungs-Zertifikats als pdf-File vorliegt, insbesondere vor dem Anbringen in ein pdf-File konvertiert wird,

6. Verfahren nach einem der Ansprüche 2-5,
**dadurch gekennzeichnet, dass**
die Erzeugung des aktuellen Stimmprofils und/oder die Registrierungs-Phase eine Übermittlung von Sprachproben per Telefon oder VoIP-Endgerät an eine Sprachproben-Eingabeschnittstelle aufweist.

7. Verfahren nach einem der Ansprüche 2-6,
**dadurch gekennzeichnet, dass**
die Erzeugung des aktuellen Stimmprofils ein Einsprechen von unter Nutzung eines Zufallsgenerators vorbestimmten Sprachproben aufweist.

8. Verfahren nach einem der vorangehenden Ansprüche,
**dadurch gekennzeichnet, dass**
eine eindeutige Verknüpfung zwischen dem Basisdokument und dem Authentifizierungs-Zertifikat in einem System-Server, unter Nutzung einer Zertifizierungs-Session-ID gebildet wird, welche sowohl dem Basisdokument, als auch dem jeweiligen Vorgang der Stimmanalyse zugewiesen wird.

9. Verfahren nach einem der vorangehenden Ansprüche,
**dadurch gekennzeichnet, dass**
die Anbringung des Authentifizierungs-Zertifikats auf dem Dokument von einem System-Server, insbesondere unter Nutzung der Zertifizierungs-Session-ID und/oder unter Verknüpfung mit einem Zeitstempel, registriert wird.

10. Verfahren nach einem der vorangehenden Ansprüche,
**dadurch gekennzeichnet, dass**
die Person in der aktuellen Stimmanalyse anhand einer systeminternen Kennung, wie etwa einer Nutzer-ID, oder einer Kennung eines Endgerätes, wie etwa der Telefonnummer oder MSISDN, identifiziert wird, von dem sie Sprachproben einspricht.

11. Verfahren nach einem der Ansprüche 2-10,
**dadurch gekennzeichnet, dass**
in der Registrierungs-Phase in Zuordnung zur registrierten Person ein Unterschriftsbild derselben gespeichert wird.

12. Verfahren nach Anspruch 11,
**dadurch gekennzeichnet, dass**
eine eindeutige Verknüpfung zwischen dem gespeicherten Unterschrifts-Bild und dem gespeicherten Stimmprofil der Person über eine Registrierungs-Session-ID gebildet wird, die sowohl dem Vorgang der initialen Stimmanalyse als auch einer Erfassung des Unterschrifts-Bildes zugewiesen wird.

13. Verfahren nach Anspruch 11 oder 12,
**dadurch gekennzeichnet, dass**
das Unterschrifts-Bild per Fax oder per E-Mail als pdf- oder Bild-Datei an einen System-Server übermittelt wird.

14. Verfahren zur Verifizierung eines signierten Text- und/oder Bilddokuments, insbesondere eines auf elektronischem Wege empfangenen digitalen Dokuments, welches mit einem Verfahren nach einem der vorangehenden Ansprüche erzeugt wurde, wobei eine Auswertung des Authentifizierungs-Zertifikats ausgeführt wird und dem Besitzer des Dokuments im Ergebnis der Auswertung unverschlüsselte Informationen zum Signierungs-/Zertifizierungs-Vorgang bereitgestellt werden.

15. Verfahren nach Anspruch 14,
**dadurch gekennzeichnet, dass**
das Dokument zur Auswertung an den System-Server übermittelt und von diesem personenbezogene Information und/oder Zeitstempel-Information an ein Endgerät des Besitzers des Dokuments übermittelt wird.

16. Verfahren nach Anspruch 14 oder 15,
**dadurch gekennzeichnet, dass**
zur Verifizierung ein 2D-Barcode auf dem als Druckbild vorliegenden Dokument gelesen wird.

17. Anordnung zur Durchführung des Verfahrens nach einem der vorangehenden Ansprüche, mit einem System-Server zur Erzeugung des signierten Dokuments aus dem eingegebenen Basisdokument, wobei dem System-Server eine Basisdokument-Eingabeschnittstelle, eine Sprachproben-Eingabeschnittstelle und eine Dokument-Ausgabeschnittstelle zugeordnet sind und der System-Server eine mit der Sprachproben-Eingabeschnittstelle verbundene Stimmanalyseeinrichtung zur Ausführung der Stimmanalyse und eine mit der Stimmanalyseeinrichtung sowie der Basisdokument-Eingabeschnittstelle eingangsseitig und der Dokument-Ausgabeschnittstelle ausgangsseitig verbundene Zertifizierungseinrichtung zur Erzeugung und Anbringung des Authentifizierungs-Zertifikats auf dem Basisdokument aufweist.

18. Anordnung nach Anspruch 17,
**dadurch gekennzeichnet,dass**
der System-Server eine Stimmprofil-Speichereinheit sowie eine mit der Stimmanalyseeinrichtung und der Stimmprofil-Speichereinheit verbundene Stimmprofil-Vergleichereinheit zum Vergleich eines initial erzeugten Stimmprofils mit einem aktuell eingesprochenen Stimmprofil und zur Ausgabe eines Steuersignals an die Zertifizierungseinrichtung zur Erzeugung des Authentifizierungs-Zertifikats aufweist.

19. Anordnung nach Anspruch 17 oder 18,
**dadurch gekennzeichnet, dass**
der System-Server eine Personendaten-Speichereinheit zur Speicherung personenbezogener Informationen der Nutzer in eindeutiger Zuordnung zu einem personenspezifischen initialen Stimmprofil aufweist.

20. Anordnung nach Anspruch 19,
**dadurch gekennzeichnet, dass**
die Personendaten-Speichereinrichtung einen Bildspeicher zur Speicherung eines Unterschrifts-Bildes und/oder einen Sprachspeicher zur Speicherung einer Sprachdatei der jeweiligen Person aufweist, wobei der Bildspeicher und/oder Sprachspeicher mit einem Eingang der Zertifizierungseinrichtung zur Anbringung des Unterschrifts-Bildes oder der Sprachdatei auf einem zu signierenden Dokument verbunden ist.

21. Anordnung nach Anspruch 19 oder 20,
**dadurch gekennzeichnet, dass**
die Personendaten-Speichereinrichtung eine Personendaten-Ausgabeschnittstelle zur Ausgabe personenbezogener Informationen an den Besitzer eines durch den System-Server signierten Dokuments aufweist.

22. Anordnung nach einem der Ansprüche 17 bis 21,
**dadurch gekennzeichnet, dass**
der System-Server eine Benutzerführungs-Einrichtung zur Realisierung einer jeweils spezifischen Menüführung in der Registrierungs-Phase und der Zertifizierungs-Phase und wahlweise einer Verifizierungs-Phase aufweist, wobei die Benutzerführungs-Einrichtung insbesondere Mittel zur Zuweisung einer Registrierungs-Session-ID bzw. Zertifizierungs-Session-ID und zur Steuerung der Stimmanalyse sowie der einander zuzuordnenden Speichervorgänge der verschiedenen Speichereinrichtungen anhand der jeweiligen Session-ID einschließt.

23. Anordnung nach einem der Ansprüche 17 bis 22,
**dadurch gekennzeichnet, dass**
die Sprachproben-Eingabeschnittstelle des System-Servers einen Telefonanschluss aufweist und während der Registrierungs-Phase eine Verbindung zu einem Telekommunikations-Endgerät eines zu registrierenden Nutzers besteht.

24. Anordnung nach einem der Ansprüche 17 bis 23,
**dadurch gekennzeichnet, dass**
an die Basisdokument-Eingabeschnittstelle und Dokument-Ausgabeschnittstelle während der Zertifizierungs-Phase ein Datenendgerät eines das Basisdokument sendenden und das signierte Dokument empfangenden Nutzers angeschlossen ist.

25. Anordnung nach einem der Ansprüche 17 bis 24,
**dadurch gekennzeichnet, dass**
während einer Verifizierungs-Phase die Basisdokument-Eingabeschnittstelle als Dokument-Eingabeschnittstelle wirkt und an diese sowie an die Personendaten-Ausgabeschnittstelle extern ein Datenendgerät des Besitzers des zu verifizierenden Dokuments oder an die Dokument-Eingabeschnittstelle ein 2D-Barcodeleser und an die Personendaten-Ausgabeschnittstelle eine Anzeigeeinheit angeschlossen ist.

26. Anordnung nach einem der Ansprüche 17 bis 25,
**dadurch gekennzeichnet, dass**
der System-Server eine eingangsseitig mit der Zertifizierungseinrichtung und optional dem Personendatenspeicher verbundene Zertifizierungsdaten-Speichereinheit sowie eine Zertifikat-Leseeinrichtung aufweist, welche ausgangsseitig mit der Verifizierungsdaten-Speichereinrichtung und eingangsseitig optional mit der Dokument-Eingabeschnittstelle verbunden und zum Lesen des in der Zertifizierungs-Phase vergebenen Authentifizierungs-Zertifikats ausgebildet ist.
